# EUROPÄISCHE PATENTSCHRIFT

(11) **EP 1 669 618 B1**
(45) Veröffentlichungstag und Bekanntmachung des Hinweises auf die Patenterteilung: **20.08.2008**
(21) Anmeldenummer: 05019315.0
(22) Anmeldetag: 06.09.2005
(51) Int. Cl.: F16C 25/04, F16H 57/02, F16H 25/20, B60N 2/06

(54) **Spindelmutter-Lageranordnung**
Bearing arrangement for spindle nut
Ensemble palier pour écrou de broche

(30) Priorität: 09.12.2004 DE 102004059538
(43) Veröffentlichungstag der Anmeldung: 14.06.2006
(73) Patentinhaber: IMS Gear GmbH, 79871 Eisenbach (DE)
(72) Erfinder: Gapp, Andreas, 78166 Donaueschingen (DE)
(74) Vertreter: Patentanwälte Westphal, Mussgnug & Partner

(56) Entgegenhaltungen:
- WO-A-01/27482
- DE-A1- 3 327 946
- DE-A1- 10 308 028
- JP-A- 57 171 115

## Beschreibung

Die Erfindung bezieht sich auf eine Spindelmutter-Lageranordnung, bei welcher eine Spindelmutter mit ihrer Stirnseite um die Längsachse rotierbar in einer Wandung eines Gehäuses gelagert ist. Durch die Wandung führt eine Durchgangsöffnung hindurch, um eine Welle durch die Wandung und durch eine Durchgangsöffnung in der Spindelmutter sowie in Eingriff mit der Spindelmutter hindurchzuführen. Die Wandung ist dabei die Wandung eines Gehäuses, in welchem die Spindelmutter aufgenommen ist und welches als Getriebegehäuse eines Spindelantriebs ausgebildet ist.

Eine solche Spindelmutter-Lageranordnung ist aus der DE 103 08 028 A bekannt, von der im Oberbegriff des Anspruchs 1 ausgegangen wird.

Nachteilhaft bei solchen Anordnungen ist, dass üblicherweise zwischen den Stirnseiten der Spindelmutter und den benachbarten Wandungen ein Abstand besteht, so dass die Spindelmutter im Gehäuse in axialer Richtung der Spindelmutter unerwünschtes Spiel hat.

Die Aufgabe der Erfindung besteht darin, eine Spindelmutter-Lageranordnung vorzuschlagen, welche eine möglichst spielfreie Lagerung der Spindelmutter in dem Gehäuse bzw. zwischen zwei Wandungen eines Gehäuses ermöglicht.

Diese Aufgabe wird durch die Spindelmutter-Lageranordnung mit den Merkmalen des Patentanspruchs 1 gelöst.

Erfindungsgemäß wird demgemäss eine Spindelmutter-Lageranordnung vorgeschlagen, mit einer Wandung mit einer Wandungsbreite und einer Durchgangsöffnung durch die Wandung hindurch, einer Lagerbuchse, welche in axialer Richtung unter Belassung eines Spiels mit einer Länge größer als der Breite der Wandung durch die Durchgangsöffnung führt und in axialer Richtung bewegbar in der Durchgangsöffnung gelagert ist, einer Spindelmutter, deren Stirnseite an einer ersten Stirnseite der Lagerbuchse innenseitig der Wandung anliegt, und einer Halterung, welche eine zweite Stirnseite der Lagerbuchse gegen die Spindelmutter abstützt, wobei die Spindelmutter in Richtung von der Wandung weg elastisch beaufschlagt ist. Erfindungsgemäß ist die Lagerbuchse axial beweglich.

Vorteilhafte Ausgestaltungen sind Gegenstand abhängiger Ansprüche.

Bevorzugt wird insbesondere eine Spindelmutter-Lageranordnung, bei der ein elastisches Element zwischen der Halterung und der zweiten Stirnseite der Lagerbuchse angeordnet ist und die Lagerbuchse gegen die Spindelmutter spannt.

Bevorzugt wird insbesondere eine Spindelmutter-Lageranordnung, bei der ein elastisches Element zwischen der Lagerbuchse und der Spindelmutter angeordnet ist und die Spindelmutter von der Lagerbuchse weg spannt.

Bevorzugt wird insbesondere eine Spindelmutter-Lageranordnung, bei der das elastische Element aus einem Elastomer besteht.

Bevorzugt wird insbesondere eine Spindelmutter-Lageranordnung, bei der die Lagerbuche stirnseitig Kragen aufweist, wobei die Länge der Lagerbuchse sich zwischen den Kragen erstreckt.

Bevorzugt wird insbesondere eine Spindelmutter-Lageranordnung, bei der die Wandung eine Gehäusewandung eines Gehäuses zur Aufnahme der Spindelmutter ist und die Halterung ein Spindelantriebhalter ist.

Bevorzugt wird insbesondere eine Spindelmutter-Lageranordnung, bei der die Spindelmutter beidseitig durch eine solche Anordnung gelagert ist.

Bevorzugt wird insbesondere eine Spindelmutter-Lageranordnung, bei der die Lagerbuchse aus zwei zylindrischen Lagerbuchsenelementen besteht, von denen das erste Lagerbuchsenelement mit seinem zylindrischen Außenumfang im zylindrischen Innenumfang des zweiten Lagerbuchsenelements rotierfähig gelagert ist.

Bevorzugt wird insbesondere eine Spindelmutter-Lageranordnung, bei der eines oder beide der Lagerbuchsenelemente einen Kragen aufweisen.

Bevorzugt wird insbesondere eine Spindelmutter-Lageranordnung, bei der durch die Anordnung aus Halterung, Lagerbuchse und elastischem Element eine Wellendurchtrittsöffnung zum Durchführen einer Spindelwelle führt.

Bevorzugt wird insbesondere eine Spindelmutter-Lageranordnung, bei der die Halterung aus einem elastischen Material besteht und die Lagerbuchse gegen die Spindelmutter spannt.

Ein Ausführungsbeispiel der Erfindung wird nachfolgend anhand der Zeichnung näher erläutert. Dabei wird davon ausgegangen, dass die Spindelmutter-Lageranordnung vorzugsweise zur Sitzlängsverstellung in Kraftfahrzeugen eingesetzt ist. Es zeigen:
- Fig. 1: eine Teilschnittansicht durch einen vergrößerten Ausschnitt einer Spindelmutter-Lageranordnung;
- Fig. 2: schematisch eine aufgeschnittene Wandung eines Gehäuses mit Spindelmutter-Lageranordnungen in den gegenüberliegenden Wandungen und eine diese einspannenden Halterung;
- Fig. 3: eine aus zwei Elementen zusammengesetzte Lagerbuchse;
- Fig. 4: eine beispielhafte Befestigung der Halterung an dem Gehäuse;
- Fig. 5: eine weitere beispielhafte Anordnung zur Befestigung der Halterung an dem Gehäuse; und
- Fig. 6: eine alternative zweiteilig ausgebildete Lagerbuchse in Schnittansicht.

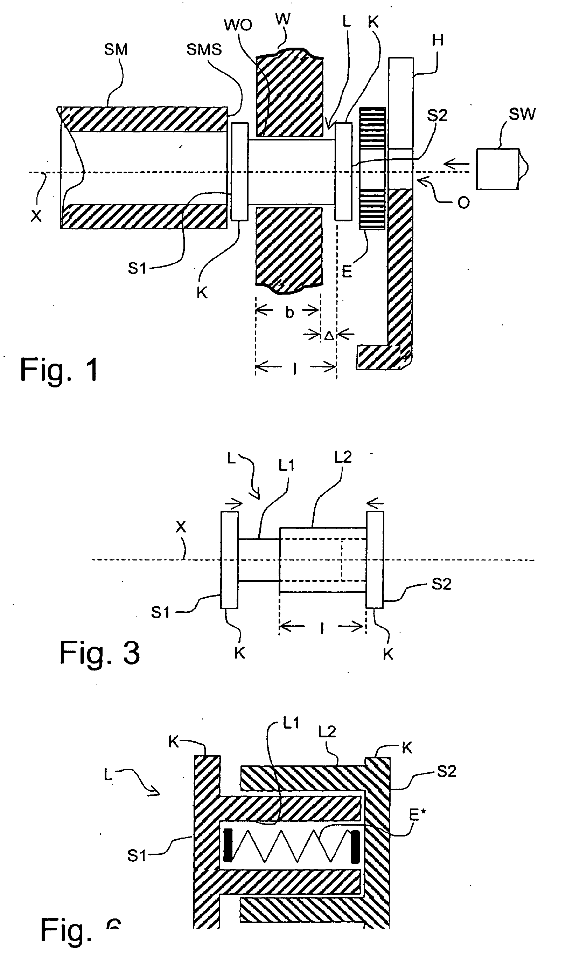

Fig.1 zeigt eine Spindelmutter-Lageranordnung in Teilschnittansicht. In üblicher Art und Weise ist eine Spindelmutter SM zwischen zwei Wandungen W, von denen nur eine skizziert ist, gelagert, wobei die Spindelmutter SM um ihre Längsachse X rotierbar gelagert ist. Durch die Wandung W führt eine Durchgangsöffnung WO hindurch.

In der Durchgangsöffnung WO ist eine Lagerbuchse L eingesetzt, welche mit ihrer ersten Stirnseite S1 an einer gegenüberliegenden Stirnseite SMS der Spindelmutter SM anliegt. Die Lagerbuchse L weist stirnseitig jeweils einen Kragen K auf, wobei gegebenenfalls einer oder beide der Kragen K auch entfallen können. Eine Länge l der Lagerbuchse L in axialer Richtung, d.h. in der Richtung, in der die Lagerbuchse L durch die Durchgangsöffnung'WO hindurchführt, ist dabei größer als eine Breite b der Wandung W. Bei der dargestellten Ausführungsform handelt es sich bei der Länge 1 um die Strecke zwischen den beiden Kragen K. Durch diese Anordnung verbleibt in axialer Richtung ein Spiel Δ entsprechend der Differenz aus der Länge 1 der Lagerbuchse L und der Breite b der Wandung W.

An einer zweiten Stirnseite S2 der Lagerbuchse L bzw. an deren entsprechendem zweiten Kragen K liegt unter Zwischenschaltung eines elastischen Elements E eine Halterung H an.

Die Halterung H ist dabei relativ zu der Wandung W des Gehäuses in axialer Richtung zur Spindelmutter SM vorgespannt. Dadurch wird die Lagerbuchse L mit ihrer ersten Stirnseite S1 gegen die Stirnseite SMS der Spindelmutter SM elastisch vorgespannt, wobei durch das Spiel Δ ein eventuell vorhandenes Spiel zwischen der Stirnseite SMS der Spindelmutter SM und der innenseitigen Oberfläche der Wandung W aufgrund der Vorspannung ausgeglichen wird. Zwar bleibt gegebenenfalls zwischen der Stirnseite SMS der Spindelmutter SM und der Innenseite der Wandung W ein Abstand, jedoch handelt es sich nicht um einen Abstand, welcher eine Bewegung der Spindelmutter SM in axialer Richtung, also ein freies Spiel ermöglicht. Durch die Ausbildung des elastischen Elements E aus insbesondere einem Elastomer ist die Spindelmutter SM relativ zu der Wandung W in axialer Richtung elastisch abgestützt.

Zum Einführen einer Spindelwelle SW führt durch die gesamte Anordnung längs der zentralen Rotationsachse X eine Wellendurchtrittsöffnung O hindurch, so dass eine Spindelwelle SW durch die Halterung H, das elastische Element E und die Lagerbuchse L hindurch in die Spindelmutter SM eingesetzt werden kann.

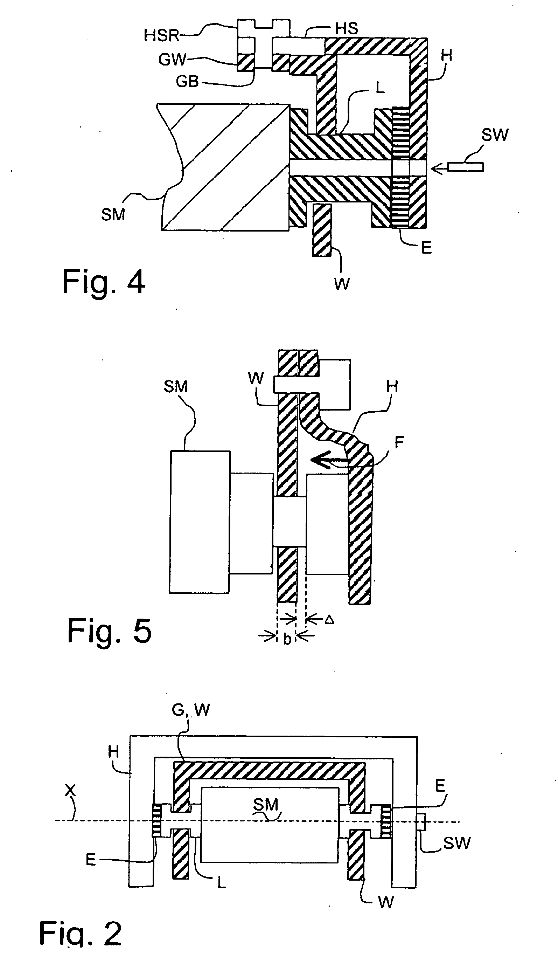

Fig. 2 stellt schematisch eine Spindelmutter SM dar, welche in ihrer axialen Richtung X beidseitig mit einer solchen Spindelmutter-Lageranordnung in zwei Wandungen W eines Gehäuses G gelagert ist. Die Halterung H umspannt dabei mit zwei entsprechenden Auslegern die Anordnung aus jeweils pro Seite einem elastischen Element E, einer Lagerbuchse L und der dazwischen eingesetzten Spindelmutter SM. Dadurch, dass die in axialer Richtung X verstellbare Länge 1 der beiden Lagerbuchsen größer als die entsprechenden Breiten b der beiden Wandungen W ist, ist die Spindelmutter SM trotz einer Beabstandung ihrer Stirnseiten SMS von den Innenseiten der Wandungen W spielfrei innerhalb des Gehäuses G gelagert.

Prinzipiell kann die Lagerbuchse L mit nur einem Kragen K oder ganz ohne Kragen K an den stirnseitigen Endabschnitten ausgebildet sein, um die Lagerbuchse L in eine Durchgangsöffnung WO in der Wandung W einführen zu können, wenn der Durchmesser der Durchgangsöffnung WO kleiner als der Außendurchmesser der entsprechenden Kragen K ausgebildet ist. Möglich ist auch eine schlitzförmige Durchgangsöffnung von einer Seitenwandung der Wandung W bis zu dem als Lagerbereich für die Lagerbuchse L ausgebildeten Abschnitt, um eine Lagerbusche L mit zwei Kragen K in den Lagerabschnitt einsetzen zu können.

Besonders bevorzugt mit Blick auf eine Durchgangsöffnung WO mit kleinerem Durchmesser als dem Außendurchmesser der Kragen K der Lagerbuchse L wird jedoch eine zweiteilige Lagerbuchse L mit einem ersten und einem zweiten Lagerbuchsenelement L1, L2, wie dies in Fig. 3 dargestellt ist. Die beiden Lagerbuchsenelemente L1, L2 bestehen beide aus einem zylinderförmigen Abschnitt, wobei in axialer Richtung X die Länge 1 zumindest eines der Lagerbuchsenelemente L2 der Länge 1 der Lagerbuchse L in axialer Richtung X entspricht. Das andere Lagerbuchsenelement L1 kann insbesondere eine kürzere Länge aufweisen. Das andere, erste Lagerbuchsenelement L1 weist einen Außendurchmesser des zylindrischen Abschnitts auf, welcher kleiner oder vorzugsweise nahezu gleich dem Innendurchmesser des zylindrischen Abschnitts des zweiten Lagerbuchsenelements L2 ist, so dass die beiden Lagerbuchsenelemente L1, L2 zusammengesteckt werden können und dabei um ihre Längsachse zueinander rotieren können. Dies ermöglicht eine Herabsetzung des Reibungswiderstands bei einer Rotation der Spindelmutter SM zwischen der Lagerbuchse L und der Wandung der Durchgangsöffnung WO in der Wandung W. Eine solche Anordnung ermöglicht eine einfache Montage der Lagerbuchse L, indem die beiden Lagerbuchsenelemente L1, L2 von den beiden Seiten der Wandung W aus in deren Durchgangsöffnung WO eingesetzt und zusammengesteckt werden.

Fig. 4 zeigt eine beispielhafte Befestigungsmöglichkeit der Halterung H direkt an einer weiteren Wandung GW des Gehäuses. Bei der weiteren Wandung GW handelt es sich um eine Wandung GW, welche sich parallel zur Rotationsachse der Spindelmutter SM erstreckt. Die Halterung H ist von dem Lagerabschnitt beabstandet gebogen und verläuft parallel zu der weiteren Wandung GW. Zur Befestigung der Halterung H weist diese einen Längsschlitz HS auf, durch welchen der Gewindeschaft einer Schraube HSR geführt wird, um die Schraube HSR in eine Gewindebohrung GB der weiteren Wandung GW einzuschrauben. Dies ermöglicht ein Ausrichten der Halterung H in axialer Richtung X und insbesondere ein Vorspannen mit einer gewünschten Spannung gegen die Anordnung aus elastischem Element E, Lagerbuchse L und Spindelmutter SM. Bei dieser Halterung H handelt es sich somit um eine dem Gehäuse direkt zugeordnete Halterung und nicht um eine Halterung H, welche zugleich als Halterung für die Spindelmutter SM und das gesamte Gehäuse an einer externen Komponente ausgebildet ist.

Fig. 5 zeigt eine weitere beispielhafte Anordnung der Halterung H an der Wandung W des Gehäuses. Bei dieser Ausführungsform besteht die Halterung H selber aus einem derart elastischen Material, dass die Halterung H mit ihrer innenseitigen Wandung direkt mit einer Spankraft F gegen die Lagerbuchse L in Richtung der Spindelmutter SM drückt. Die Halterung H ist entsprechend direkt an der Wandung W selber befestigt, beispielsweise mittels einer Schraubverbindung oder Lötverbindung.

Fig. 6 zeigt eine alternative Ausgestaltung der Lagerbuchse L. Diese Lagerbuchse L unterscheidet sich von der in Fig. 3 skizzierten zweiteiligen Lagerbuchse L dadurch, dass zwischen den Wandungen der Stirnseiten S1, S2 im Innenraum ein elastisches Element E*, insbesondere in Form einer Schraubenfeder, eingesetzt ist. Dieses elastische Element E* drückt die beiden Lagerbuchsenelemente L1, L2 auseinander und übernimmt somit die Funktion des stirnseitig der Lagerbuchse L in der Gesamtanordnung eingesetzten elastischen Elements E gemäß beispielsweise Fig. 1.

Umsetzbar ist somit eine Vielzahl von Varianten, bei denen das freie Spiel Δ der Spindelmutter SM im Gehäuse G über zwei beidseitig angebrachte Lagerbuchsen, die über ihre H-Form im Gehäuse des Getriebes aufgenommen sind, dadurch herausgenommen wird, dass über ein elastisches Element die Lagerbuchsen auf Anschlag zur Spindelmutter gedrückt werden. Dazu weisen die Lagerbuchsen gegenüber der Gehäusedicke bzw. Breite der Wandungen ein Spiel auf, welches ein solches axiales Verschieben der Lagerbuchsen zulässt. Das elastische Element ist als Elastomerteil vorzugsweise von außen über den Halter des Spindelantriebs abgestützt. Die Spindelmutter sollte vorzugsweise mit halbgloboidischer Verzahnung mit zylindrischem Anteil ausgebildet sein, so dass Anlaufscheiben entfallen können.

## Patentansprüche

1. Spindelmutter-Lageranordnung mit
- einer Wandung (W) mit einer Wandungsbreite (b) und einer Durchgangsöffnung (WO) durch die Wandung (W) hindurch,
- einer Lagerbuchse (L), welche in axialer Richtung unter Belassung eines Spiels (Δ) mit einer Länge (1) größer als der Breite (b) der Wandung (W) durch die Durchgangsöffnung (WO) führt und in axialer Richtung (X) bewegbar in der Durchgangsöffnung gelagert ist,
- einer Spindelmutter (SM), die sich mit ihrer Stirnseite (SMS) an einer ersten Stirnseite (S1) der Lagerbuchse (L) abstützt, und
- einer Halterung (H), welche eine zweite Stirnseite (S2) der Lagerbuchse (L) gegen die Spindelmutter (SM) derart abstützt,
- dass die Spindelmutter (SM) in Richtung von der Wandung (W) weg elastisch beaufschlagt ist.

2. Spindelmutter-Lageranordnung nach Anspruch 1, bei der ein elastisches Element (E) zwischen der Halterung (H) und der zweiten Stirnseite (S2) der Lagerbuchse (L) angeordnet ist und die Lagerbuchse (L) gegen die Spindelmutter (SM) spannt.

3. Spindelmutter-Lageranordnung nach Anspruch 1 oder 2, bei der ein elastisches Element zwischen der Lagerbuchse (L) und der Spindelmutter (SM) angeordnet ist und die Spindelmutter (SM) von der Lagerbuchse weg spannt.

4. Spindelmutter-Lageranordnung nach Anspruch 2 oder 3, bei der das elastische Element (E) aus einem Elastomer besteht.

5. Spindelmutter-Lageranordnung nach einem vorstehenden Anspruch, bei der die Lagerbuchse (L) stirnseitig Kragen (K) aufweist, wobei die Länge (1) der Lagerbuchse (L) sich zwischen den Kragen (K) erstreckt.

6. Spindelmutter-Lageranordnung nach einem vorstehenden Anspruch, bei der die Wandung (W) eine Gehäusewandung eines Gehäuses (G) zur Aufnahme der Spindelmutter (SM) ist und die Halterung (H) ein Spindelantriebhalter ist.

7. Spindelmutter-Lageranordnung nach einem vorstehenden Anspruch, bei der die Spindelmutter (SM) beidseitig durch eine solche Anordnung gelagert ist.

8. Spindelmutter-Lageranordnung nach einem vorstehenden Anspruch, bei der die Lagerbuchse (L) aus zwei zylindrischen Lagerbuchsenelementen (L1, L2) besteht, von denen das erste Lagerbuchsenelement (L1) mit seinem zylindrischen Außenumfang im zylindrischen Innenumfang des zweiten Lagerbuchsenelements (L2) rotierfähig gelagert ist.

9. Spindelmutter-Lageranordnung nach Anspruch 8, bei der eines oder beide der Lagerbuchsenelemente L1, L2 einen Kragen (K) aufweisen.

10. Spindelmutter-Lageranordnung nach einem vorstehenden Anspruch, bei der durch die Anordnung aus Halterung (H), Lagerbuchse (L) und elastischem Element (E) eine Wellendurchtrittsöffnung (O) zum Durchführen einer Spindelwelle (SW) führt.

11. Spindelmutter-Lageranordnung nach einem vorstehenden Anspruch, bei der die Halterung (H) aus einem elastischen Material besteht und die Lagerbuchse (L) gegen die Spindelmutter (SM) spannt.

12. Verwendung der Spindelmutter-Lageranordnung nach einem der Ansprüche 1 bis 11 in einer Sitzlängsverstellungseinrichtung von Kraftfahrzeugen.

## Claims

1. A bearing arrangement for a spindle nut, comprising:
- a wall (W) having a wall width/thickness (B) and a through-hole (WO) that passes through the wall (W);
- a support bushing (L) which passes in the axial direction through the through-hole (WO), leaving a clearance (Δ) with a length (1) greater than the width (b) of the wall (W) and which is mounted/supported in the through-hole for movement in the axial direction (X),
- a spindle nut (SM) is supported by its end face (SMS) on a first end face (S1) of the bearing bush (L), and
- a mounting (H) that supports a second end face (S2) of the bearing bush (L) against the spindle nut (SM) such that
- the spindle nut (SM) is elastically loaded in a direction away from the wall (W).

2. A bearing arrangement for a spindle nut according to Claim 1, in which an elastic element (E) is disposed between the mounting (H) and the second end face (S2) of the bearing bush (L) and clamps the bearing bush (L) against the spindle nut.

3. A bearing arrangement for a spindle nut according to Claim 1 or 2, in which an elastic element is disposed between the bearing bush (L) and the spindle nut (SM) and clamps the spindle nut (SM) away from the bearing bush.

4. A bearing arrangement for a spindle nut according to Claim 2 or 3, in which the elastic element (E) is made from an elastomer.

5. A bearing arrangement for a spindle nut according to a preceding Claim, in which the bearing bush (L) comprises collars (K) at the end faces, the length (1) of the bearing bush (L) extending between the collars (K).

6. A bearing arrangement for a spindle nut according to a preceding Claim, in which the wall (W) comprises a wall of a housing (G) to house the spindle nut (SM) and the mounting (H) is a spindle drive mount.

7. A bearing arrangement for a spindle nut according to a preceding Claim, in which the spindle nut (SM) is supported on either side by such an arrangement.

8. A bearing arrangement for a spindle nut according to a preceding Claim, in which the bearing bush (L) consists of two cylindrical bearing bush elements (L1, L2), the first bearing bush element (L1) of which is rotatably supported with its cylindrical external circumference in the cylindrical internal circumference of the second bearing bush element (L2).

9. A bearing arrangement for a spindle nut according to Claim 8, in which one or both of the bearing bush elements L1, L2 comprise/comprises a collar (K).

10. A bearing arrangement for a spindle nut according to a preceding Claim, in which a shaft opening (0) for the passage of a spindle shaft (SW) passes through the arrangement consisting of the mounting (H), the bearing bush (L) and the elastic element (E).

11. A bearing arrangement for a spindle nut according to a preceding Claim, in which the mounting (H) is made from an elastic material and clamps the bearing bush (L) against the spindle nut.

12. Use of the bearing arrangement for a spindle nut according to one of Claims 1 to 11 in a mechanism for the longitudinal adjustment of seats in motor vehicles.

## Revendications

1. Ensemble palier pour écrou de broche comprenant :
une paroi (W) d'une épaisseur (b) et un orifice de passage (WO) à travers la paroi (W),
un coussinet (L) ayant une longueur (1) dans la direction axiale, supérieure à la largeur (b) de la paroi (W) en laissant un jeu (Δ), ce coussinet traversant l'orifice de passage (WO) et étant monté mobile dans la direction axiale (X) dans l'orifice de passage,
un écrou de broche (SM) s'appuyant par sa face frontale (SMS) contre une première face frontale (S1) du coussinet (L), et
une fixation (H) qui appuie une seconde face frontale (S2) du coussinet (L) contre l'écrou de broche (SM) de façon que l'écrou de broche (SM) soit sollicité élastiquement dans la direction en s'écartant de la paroi (W).

2. Ensemble palier pour écrou de broche selon la revendication 1,
dans lequel
un élément élastique (E) est disposé entre la fixation (H) et la seconde face frontale (S2) du coussinet (L) et cet élément met en tension le coussinet (L) contre l'écrou de broche (SM).

3. Ensemble palier pour écrou de broche selon la revendication 1 ou 2,
dans lequel
un élément élastique est disposé entre le coussinet (L) et l'écrou de broche (SM) et met en tension l'écrou de broche (SM) pour l'écarter du coussinet.

4. Ensemble palier pour écrou de broche selon la revendication 2 ou 3,
dans lequel
l'élément élastique (E) est en un élastomère.

5. Ensemble palier pour écrou de broche selon les revendications précédentes,
dans lequel
le coussinet (L) comporte des collerettes frontales (K) et la longueur (1) du coussinet (L) est prise entre les collerettes (K).

6. Ensemble palier pour écrou de broche selon les revendications précédentes,
selon lequel
la paroi (W) est une paroi d'un boîtier (G) recevant l'écrou de broche (SM) et la fixation (H) est un support d'entraînement de broche.

7. Ensemble palier pour écrou de broche selon les revendications précédentes
selon lequel
l'écrou de broche (SM) est équipé des deux côtés d'un tel ensemble.

8. Ensemble palier pour écrou de broche selon les revendications précédentes
selon lequel
le coussinet (L) se compose de deux éléments de coussinet (L1, L2), cylindriques, le premier élément de coussinet (L1) étant logé par sa périphérie extérieure cylindrique dans la périphérie intérieure cylindrique du second élément de coussinet (L2) de manière à pouvoir tourner.

9. Ensemble palier pour écrou de broche selon la revendication 8,
selon lequel
l'un ou les deux éléments de coussinet (L1, L2) comportent une collerette (K).

10. Ensemble palier pour écrou de broche selon les revendications précédentes
selon lequel
l'ensemble formé de la fixation (H), du coussinet (L) et de l'élément élastique (E) comporte un orifice de passage d'arbre (O) pour le passage d'un arbre de broche (SW).

11. Ensemble palier pour écrou de broche selon les revendications précédentes
selon lequel
la fixation (H) est une matière élastique et met en tension le coussinet (L) contre l'écrou de broche (SM).

12. Application de l'ensemble de palier écrou de broche selon les revendications 1 à 11 appliquée à une installation de réglage longitudinal d'un siège de véhicule automobile.
